# EUROPÄISCHE PATENTSCHRIFT

(11) **EP 0 909 372 B1**
(45) Veröffentlichungstag und Bekanntmachung des Hinweises auf die Patenterteilung: **19.12.2001**
(21) Anmeldenummer: 97928180.5
(22) Anmeldetag: 12.06.1997
(51) Int. Cl.: G01D 5/245, G01B 7/30

(54) **Handbetätigter Winkelgeber mit radialer Magnetrastierung**
Manually operated angle pickup with radial magnetic indexing
Capteur angulaire manuel avec mécanisme magnétique à crants d'arrêt radial

(30) Priorität: 05.07.1996 DE 19627089; 01.04.1997 DE 29705744 U
(43) Veröffentlichungstag der Anmeldung: 21.04.1999
(73) Patentinhaber: EUCHNER GmbH + Co., 70771 Leinfelden-Echterdingen (DE)
(72) Erfinder: BAUR, Jan, D-70771 Leinfelden-Echterdingen (DE); LINK, Walter, D-71277 Rutesheim (DE)
(74) Vertreter: Patentanwälte Bartels und Partner
(86) Internationale Anmeldenummer: EP9703056
(87) Internationale Veröffentlichungsnummer: WO9801723

(56) Entgegenhaltungen:
- DE-A- 4 311 496
- DE-A- 4 436 724
- GB-A- 999 972
- US-A- 4 970 423

## Beschreibung

Die Erfindung betrifft einen handbetätigten Winkelgeber mit den Merkmalen des Oberbegriffs des Anspruches 1.

Bei einem bekannten Winkelgeber dieser Art (DE 43 11 496 C2) ist das Geberelement eine Scheibe, deren äußere Randzone durch Zungen gebildet wird, die derart umgebogen sind, daß sie auf einem Teil ihrer Länge in einer zur Drehachse des Geberelements konzentrischen Zylinderfläche liegen. Konzentrisch zu dieser Zylinderfläche und in geringerem radialem Abstand von ihr in Umfangsrichtung sind im Wechsel aufeinanderfolgende Nord- und Südpole eines dem zweiten Teil des Rastmechanismus zugeordneten Magneten vorgesehen.

Bei vorgegebener Teilung ist eine bestimmte Mindestgröße erforderlich, die aufgrund des erforderlichen Polabstandes fest vorgegeben ist.

Aus der DE 44 36 724 A1 ist ferner ein elektronischer Positionsgeber mit einem magnetischen Rastsystem bekannt, bei dem die Magnetverrastung mindestens drei zueinander koaxiale wechselweise wellen- und trägerfeste, jeweils über den gesamten Scheibenumfang radial genutete Magnetrastscheiben enthält.

Die Anziehungskraft zwischen den einzelnen Magnetrastscheiben wird durch axialen Versatz verringert. Somit sind nur geringe Toleranzen bei der Fertigung möglich.

Der Erfindung liegt daher die Aufgabe zugrunde, einen handbetätigten Winkelgeber zu schaffen, der bei gleicher Teilung kleiner baut und zudem realtiv große Einbautoleranzen zuläßt, ohne in seiner Funktion beeinträchtigt zu sein.

Diese Aufgabe löst ein handbetätigten Winkelgeber mit den Merkmalen des Anspruches 1.

Die axiale Anordnung der Nord-Südpole ermöglicht eine Miniaturisierung, insbesondere in radialer Richtung. Dabei ist der Durchmesser des Winkelgebers unabhängig von Mindestabständen unterschiedlicher Pole.

Besonders kostengünstig ist die Verwendung eines einzigen Permanentmagneten. Ein Montagefehler aufgrund falscher Einbaurichtung kann bei dieser Ausgestaltung nicht vorkommen.

Besonders gut zur Miniaturisierung geeignet sind beidseitig des Permanentmagneten angeordnete Zahnscheiben und zu diesen korrespondierende Scheiben, beispielsweise durch ein Rohr miteinander verbunden sind. Dabei bestehen die Zahnscheiben, die Scheiben und deren Verbindungselement aus einem Material, das den magnetischen Fluß gut leitet. Aufgrund der Kontur der Zähne variiert der Luftspalt zwischen Zahnscheiben und Scheiben, wobei der magnetische Fluß und somit die Anziehung der Zähne der Zahnscheiben und Scheiben am größten ist, wenn sich die Zähne direkt gegenüberliegen.

Es können beide Pole mit jeweils einer Zahnscheibe verbunden sein, wobei die korrespondierenden Scheiben in radialem Abstand angeordnet sind. Es ist aber auch möglich, daß nur einer der beiden Pole mit einer Zahnscheibe verbunden ist und nur eine korrespondierende Scheibe in radialem Abstand vorgesehen ist. Gegenüber dem anderen Pol ist dann in axialem Abstand eine zahnlose Scheibe angeordnet, die zur Zahnscheibe korrespondierende Scheibe über ein Verbindungselement in magnetisch leitender Verbindung steht. Die zahnlose Scheibe kann dabei ein einzelnes Bauteil sein oder mit dem Verbindungselement in der Art eines Topfes einstückig ausgebildet sein.

Die Zähnezahl hundert ermöglicht eine besonders gute Handhabung des Winkelgebers zur schnellen und genauen Einstellung oder Eingabe, beispielsweise von Koordinaten bei einer CNC-Steuerung. Weitere bevorzugte Zähnezahlen sind sechzehn, zweiunddreißig, fünfzig oder sechzig, jedoch sollte die Zähnezahl im Bereich zehn bis hundertsechzig liegen, um eine gute Handhabung zu gewährleisten.

Besonders kompakt wird der Winkelgeber, wenn der Rastmechanismus direkt im Einstellrad vorgesehen ist.

Weitere vorteilhafte Ausgestaltungen sind den Unteransprüchen zu entnehmen.

Im folgenden ist die Erfindung anhand dreier in den Zeichnungen dargestellten Ausführungsbeispiele im einzelnen erläutert. Es zeigen
- Fig. 1: einen Längsschnitt durch ein erstes Ausführungsbeispiel,
- Fig. 2: einen Querschnitt entlang der Schnittlinie II-II von Fig. 1,
- Fig. 3: einen Längsschnitt durch ein zweites Ausführungsbeispiel,

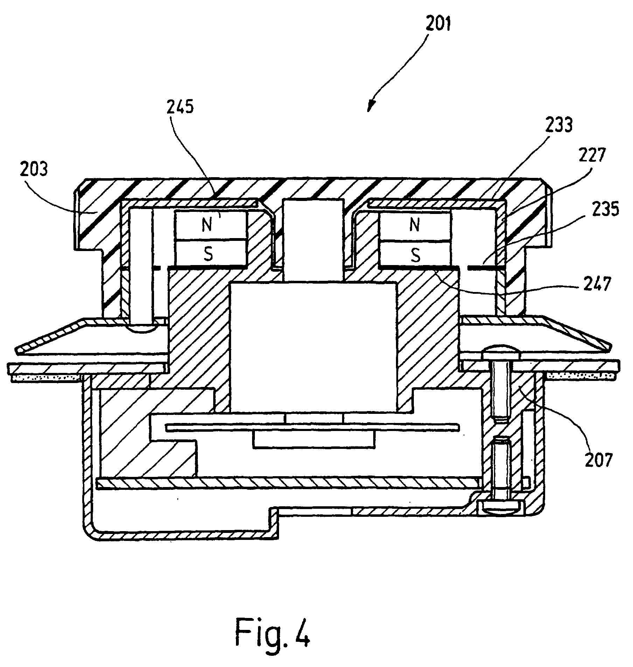

- Fig. 4: einen Längsschnitt durch ein drittes Ausführungsbeispiel.

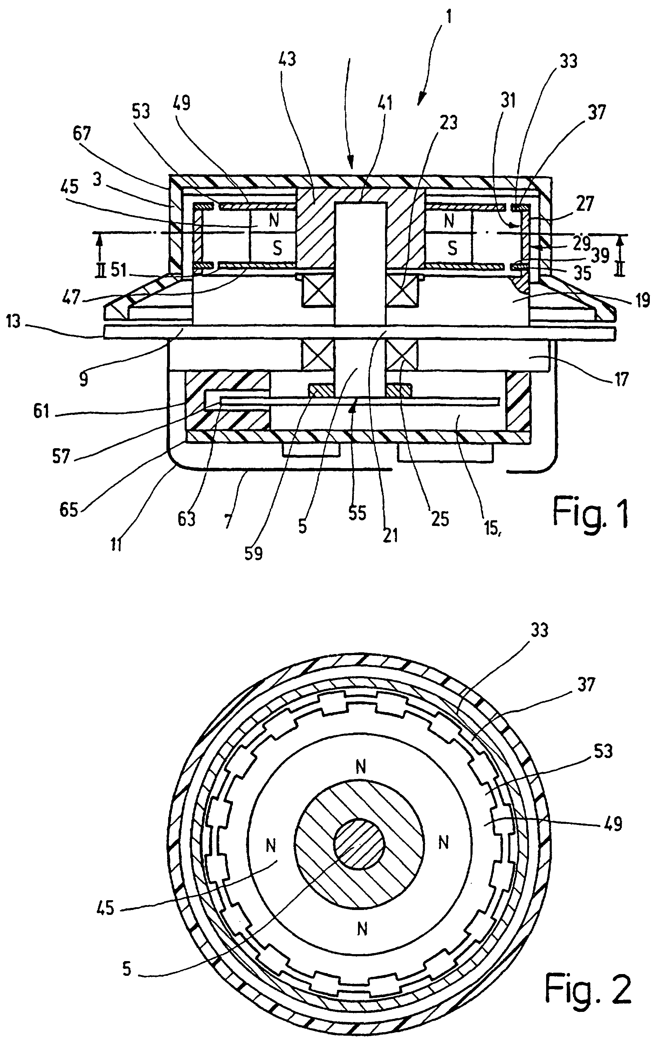

Fig. 1 zeigt einen handbetätigten Winkelgeber 1 mit einem Einstellrad 3, das mittels einer Welle 5 an einem Gehäuse 7 außenseitig angebracht und gelagert ist. In der Gesamtheit werden sämtliche mittels der Welle 5 drehbar gelagerten Teile als Geberelement bezeichnet. Das Gehäuse 7 weist einen Gehäusedekkel 9 und ein topfförmiges Unterteil 11 auf. Der Gehäusedeckel 9 ragt unter Bildung eines rotationssymmetrischen Flansches 13 seitlich über das Unterteil 11 hinaus. Mit Hilfe des Flansches 13 kann der Winkelgeber 1 beispielsweise in einer Schalttafel oder Tastatur befestigt werden.

Der Gehäusedeckel 9 hat in Richtung des Gehäuseinnenraums 15 eine scheibenförmige Verstärkung 17, deren Außenkontur im wesentlichen der Öffnungsform des Unterteils 11 entspricht. In entgegegesetzter Richtung hat der Gehäusedeckel 9 eine weitere scheibenförmige Verstärkung 19. In der Mitte des Gehäusedeckels 9 ist eine senkrecht durch die Verstärkungen 17 und 19 verlaufende Durchgangsbohrung 21 vorgesehen, in der die Welle 5 mittels Lager 23 und 25 radial und axial gelagert ist.

Ein Rohr 27 bildet mit seiner Außenseite 29 die Verlängerung der Außenkontur des Zylinders der Verstärkung 19. Auf der Innenseite 31 des Rohres 27 sind in axialem Abstand voneinander zwei Scheiben 33 und 35 mit übereinstimmenden Innenverzahnungen 37 und 39 ohne Winkelversatz angeordnet.

Am aus dem Gehäuse 7 ragenden Ende 41 der Welle 5 ist ein rotationssymmetrisches Teil 43 beispielsweise durch Aufschrumpfen oder Einkleben angebracht, das an seinem Umfang einen Permanentmagneten 45 und zwei gleiche Zahnscheiben 47 und 49 mit Außenverzahnungen 51 und 53 trägt. Die erste Zahnscheibe 47 ist auf der dem Gehäuse 7 zugewandten Seite, die zweite Zahnscheibe 49 der dem Gehäuse 7 abgewandten Seite des Permanentmagneten 45 ohne Winkelversatz bezüglich der ersten Zahnscheibe 47 angeordnet. Der Abstand der beiden Zahnscheiben 47 und 49 entspricht der Dicke des Permanentmagneten 45 und bestimmt auch den Abstand der beiden Scheiben 33 und 35, die jeweils konzentrisch um die Zahnscheiben 47 bzw. 49 angeordnet sind, wobei zwischen den Kopfkreisen der Innenverzahnungen 37, 39 der Scheiben 33,35 und den Außenverzahnungen 51, 53 der Zahnscheiben 47, 49 jeweils ein geringer radialer Abstand besteht.

Die Zähnezahl der Zahnscheiben 47 und 49 stimmt mit der Zähnezahl der Innenverzahnung 37 und 39 der Scheiben 33 und 35 überein. Dabei kann die Zähnezahl der Zahnscheiben 47 und 49 und der Scheiben 33 und 35 frei gewählt werden, jedoch ist die Zähnezahl hundert besonders gut geeignet. Zur vereinfachten Darstellung sind in Fig. 2 nur 16 Zähne dargestellt.

Die Zahnscheiben 47 und 49 wie auch die Scheiben 33 und 35 und das Rohr 27 bestehen aus einem Material, das den magnetischen Fluß, der vom Permanentmagneten 45 ausgeht, gut leitet.

Der Permanentmagnet 45 bildet zusammen mit den Zahnscheiben 47 und 49, sowie den Scheiben 33 und 35 und dem Rohr 27 einen Rastmechanismus. Dabei stellt der Permanentmagnet 45 mit den Zahnscheiben 47 und 49 eine Art Hufeisenmagnet und die Scheiben 33 und 35 mit dem Rohr 27 eine Art Joch dar, das aufgrund des magnetischen Flusses um so stärker angezogen wird, je kleiner der radiale Abstand, d.h. der Luftspalt zwischen der Scheibe 33 und der Zahnscheibe 47 bzw. der Scheibe 35 und der Zahnscheibe 49 ist. Dieser radiale Abstand ist am kleinsten, wenn sich die Zähne der Scheiben 33, 35 und der Zahnscheiben 47, 49 direkt gegenüberliegen. Aufgrund der Vielzahl der magnetischen Kreise, die der Zähnezahl der Scheiben 33, 35 und der Zahnscheiben 47, 49 entspricht, ist die Anziehungskraft zwischen der Gesamtheit der Hufeisenmagnete und Joche in der in Fig. 2 dargestellten Stellung relativ hoch, auch wenn das Rastmoment der einzelnen magnetischen Kreise gering ist.

Am im Gehäuseinnenraum 15 befindlichen Ende 55 der Welle 5 ist eine runde Codescheibe 57 angebracht. Zur Vergrößerung der Anlagefläche zwischen Codescheibe 57 und der Welle 5 ist konzentrisch zur Welle 5 an deren Ende 55 ein Ring 59 angeordnet, der auf seiner an der Codescheibe 57 zugewandten Seite zusammen mit dem Ende 55 eine plane Fläche bildet.

An der Verstärkung 17 ist im Gehäuseinnenraum 15 eine Gabel 61 mit einer Aüsnehmung 63 angebracht. In diese Ausnehmung 63 ragt ein Randbereich der Codescheibe 57. Als Sensor, der bei jeder Drehung der Welle 5 in die nächste Rastposition ein impulsartiges Signal erzeugt, kann in der Gabel 61 eine Lichtschranke vorgesehen sein. Wenn der Sensor ein impulsartiges Signal erzeugt, so kann der Winkelgeber 1 auch als inkrementaler Positionsgeber verwendet werden. Auf der Unterseite der Gabel 61 ist eine Leiterplatte 65 angeordnet, die mittels eingebauten Chip entweder die Meßergebnisse der Abtastung selbst umwandelt und dadurch eine entsprechende Winkelstellung der Zahnscheiben 47 und 49 zu den feststehenden Scheiben 33 und 35 ermittelt. Alternativ dazu können die Abtastsignale an eine externe Auswertevorrichtung weitergeleitet werden.

Die Abdeckung der aus dem Gehäuse 7 ragenden Teile erfolgt mittels eines an der dem Gehäuse 7 abgewandten Seite des Teiles 43 angebrachten haubenartigen Teiles 67 des Einstellrades 3. Dieses haubenartige Teil 67 dient gleichzeitig zur Verdrehung der mit der Welle verbundenen Teile und somit der Positionseingabe von Hand.

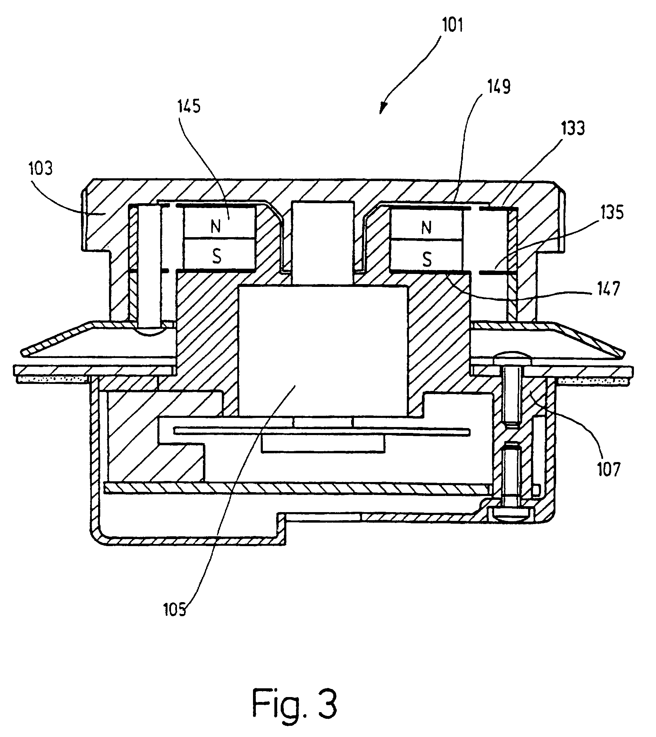

Fig. 3 zeigt einen zweiten handbetätigten Winkelgeber 101, dessen Aufbau im wesentlichen mit dem des ersten Ausführungsbeispiels vergleichbar ist. Der wesentliche Unterschied besteht darin, daß der Permanentmagnet 145 nicht mit der Welle 105, sondern mit dem Gehäuse 107 verbunden ist. Dementsprechend sind auch die Zahnscheiben 147 und 149 ortsfest, wohingegen die Scheiben 133 und 135 mit dem Einstellrad 103 verbunden sind. Der Rastmechanismus funktioniert entsprechend dem ersten Ausführungsbeispiel, wobei jedoch die bewegten und die stationären Teile vertauscht sind.

Das dritte Ausführungsbeispiel eines Winkelgebers 201 stimmt im wesentlichen mit dem ersten und dem zweiten Ausführungsbeispiel überein. Der mit dem Gehäuse 207 verbundene Permanentmagnet 245 ist am Südpol mit einer Zahnscheibe 247 verbunden. Dieser Zahnscheibe 247 ist in radialem Abstand eine korrespondierende Scheibe 235 mit entsprechender Zähnezahl angeordnet, welche mit dem Einstellrad 203 verbunden ist. Gegenüber dem Nordpol ist in axialem Abstand eine zahnlose Scheibe 233 angeordnet. Diese zahnlose Scheibe 233 steht über ein rohrförmiges Verbindungselement 227 mit der zur Zahnscheibe 247 korrespondierenden Scheibe 235 in magnetisch leitender Verbindung, womit der magnetische Fluß geschlossen ist. Die zahnlose Scheibe 233 und das rohrförmige Verbindungselement 227 sind im Ausführungsbeispiel einstückig ausgebildet, weisen also die Form eines Topfes auf.

Die Abtastung der Winkelstellung kann in Abwandlung der Ausführungsbeispiele außerhalb des Gehäuses 7, 107 innerhalb des haubenartigen Teiles 67 erfolgen. Hierfür kann eine der Zahnscheiben 47, 49 bzw. der Scheiben 133, 135, 235 verwendet werden.

## Patentansprüche

1. Handbetätigter Winkelgeber (1; 101; 201) mit einem drehbar gelagerten und manuell bewegbaren Geberelement, einem dieses abtastenden Sensor und einem magnetisch und berührungslos wirkenden Rastmechanismus, welcher das Geberelement in definierten, durch die Handbetätigung ineinander überführbaren Winkelpositionen hält, wobei der Rastmechanismus wenigstens einen Permanentmagneten (45; 145; 245) aufweist, dessen Pole (N, S) in axialer Richtung angeordnet sind, wobei auf der Seite wenigstens eines Poles des Permanentmagneten (45; 145; 245) eine Zahnscheibe (47, 49; 147, 149; 247) vorgesehen ist, **dadurch gekennzeichnet, daß** der Winkelgeber (1; 101;201) in radialem Abstand zu den vorgesehenen Zahnscheiben (47, 49; 147, 149; 247) Scheiben (33, 35; 133, 135; 235) mit entsprechender Zähnezahl aufweist, wobei die vorgesehenen Scheiben (33, 35; 133 135; 235) durch den magnetischen Fluß gut leitendes Material miteinander verbunden sind.

2. Winkelgeber nach Anspruch 1, **dadurch gekennzeichnet, daß** auf der Seite sowohl des Nordpols (N) als auch des Südpols (S) des Permanentmagneten (45; 145) jeweils eine Zahnscheibe (47, 49; 147, 149) mit übereinstimmender Zähnezahl vorgesehen ist.

3. Winkelgeber nach Anspruch 1, **dadurch gekennzeichnet, daß** nur auf der Seite eines Poles (S) des Permanentmagneten (245) eine Zahnscheibe (247) und gegenüber dem anderen Pol (N) in axialem Abstand eine Scheibe (233) vorgesehen ist, welche mit der gegenüber der Zahnscheibe (247) vorgesehenen Scheibe (235) in magnetisch leitender Verbindung steht.

4. Winkelgeber nach einem der Ansprüche 1 bis 3, **dadurch gekennzeichnet, daß** die Zähnezahl der Zahnscheiben (47, 49; 147, 149; 247) und Scheiben (33, 35; 133, 135; 235) größer oder gleich zehn und kleiner oder gleich hundertsechzig ist.

5. Winkelgeber nach einem der Ansprüche 1 bis 4, **dadurch gekennzeichnet, daß** der Rastmechanismus in einem der Handbetätigung dienenden Einstellrad (3; 103; 203) angeordnet ist.

6. Winkelgeber nach einem der Ansprüche 1 bis 5, **dadurch gekennzeichnet, daß** wenigstens ein Teil des Geberelementes innerhalb eines Gehäuses (7; 107; 207) vorgesehen ist.

7. Winkelgeber nach Anspruch 6, **dadurch gekennzeichnet, daß** im Gehäuseinnenraum (15) eine Codescheibe (57) vorgesehen ist, die Teil des Geberelements (8) ist, wobei die Codescheibe (57) vom Sensor abgetastet wird.

8. Winkelgeber nach einem der Ansprüche 1 bis 7, **dadurch gekennzeichnet, daß** der Permanentmagnet (45) Teil des Geberelements ist.

9. Winkelgeber nach Anspruch 6 oder 7, **dadurch gekennzeichnet, daß** der Permanentmagnet (145; 245) fest mit dem Gehäuse (107; 207) verbunden ist.

## Claims

1. Manually activated angle sensor (1; 101; 201) having a rotationally arranged and manually movable sensor element, a pickup which scans the sensor element and a magnetically and contactlessly functioning latching mechanism which holds the sensor element in defined angular positions, which can be changed from one to the other by manual activation, the latching mechanism having at least one permanent magnet (45; 145; 245) whose poles (N, S) are arranged in an axial direction, a toothed disc (47, 49; 147, 149; 247) being provided at the side of at least one pole of the permanent magnet (45; 145; 245), **characterised in that** the angle sensor (1; 101; 201) has discs (33, 35; 133, 135; 235) having a corresponding number of teeth with radial spacing from the toothed discs (47, 49; 147, 149; 247) provided, the discs (33, 35; 133, 135; 235) provided being connected to each other by the magnetic flux of highly conductive material.

2. Angle sensor according to claim 1, **characterised in that** a toothed disc (47, 49; 147, 149) having a matching number of teeth is provided at the side both of the north pole (N) and the south pole (S) of the permanent magnet (45; 145).

3. Angle sensor according to claim 1, **characterised in that** a toothed disc (247) is provided only at the side of one pole (S) of the permanent magnet (245) and a disc (233) is provided with axial spacing opposite the other pole (N), which disc (233) is connected in a magnetically conductive manner to the disc (235) provided opposite the toothed disc (247).

4. Angle sensor according to any one of claims 1 to 3, **characterised in that** the number of teeth of the toothed discs (47, 49; 147, 149; 247) and discs (33, 35; 133, 135; 235) is greater than or equal to ten and less than or equal to one hundred and sixty.

5. Angle sensor according to any one of claims 1 to 4, **characterised in that** the latching mechanism is arranged in an adjustment wheel (3, 103; 203) which is used for the manual activation.

6. Angle sensor according to any one of claims 1 to 5, **characterised in that** at least a portion of the sensor element is provided within a housing (7; 107; 207).

7. Angle sensor according to claim 6, **characterised in that** a code disc (57) is provided in the housing interior (15) and is part of the sensor element (8), the code disc (57) being scanned by the pickup.

8. Angle sensor according to any one of claims 1 to 7, **characterised in that** the permanent magnet (45) is part of the sensor element.

9. Angle sensor according to claim 6 or claim 7, **characterised in that** the permanent magnet (145; 245) is securely connected to the housing (107; 207).

## Revendications

1. Indicateur de position angulaire à commande manuelle (1 ; 101 ; 201) comprenant un élément de positionnement logé de manière à pouvoir tourner et pouvant être déplacé à la main, un capteur qui palpe la position de celui-ci et un mécanisme à crans d'arrêt qui agit par voie magnétique et sans contact et qui maintient l'élément de positionnement dans des positions angulaires définies, pouvant être transposées l'une vers l'autre par la commande manuelle, le mécanisme à crans d'arrêt étant muni d'au moins un aimant permanent (45 ; 145 ; 245), dont les pôles (N, S) sont disposés dans le sens axial, un disque denté (47, 49 ; 147, 149 ; 247) étant prévu sur la face d'au moins un pôle de l'aimant permanent (45 ; 145 ; 245), **caractérisé en ce que** l'indicateur de position angulaire (1 ; 101 ; 201) comporte des disques (33, 35 ; 133, 135 ; 235), disposés à une distance radiale donnée des disques dentés (47, 49 ; 147, 149 ; 247) prévus et munis d'un nombre de dents correspondant, les disques (33, 35 ; 133, 135 ; 235) prévus étant reliés l'un à l'autre par le flux magnétique d'un matériau bon conducteur.

2. Indicateur de position angulaire selon la revendication 1, **caractérisé en ce que**, non seulement sur la face du pôle nord (N), mais aussi sur la face du pôle sud (S) de l'aimant permanent (45 ; 145), il est prévu de poser un disque denté (47, 49 ; 147, 149) avec un nombre de dents approprié.

3. Indicateur de position angulaire selon la revendication 1, **caractérisé en ce qu'**un disque denté (247) est prévu sur la face d'un pôle (S) seulement et un disque (233) situé à une distance axiale donnée en face de l'autre pôle (N), lequel disque est relié par conduction magnétique avec le disque (235) prévu en face du disque denté (247).

4. Indicateur de position angulaire selon l'une quelconque des revendications 1 à 3, **caractérisé en ce que** le nombre de dents des disques dentés (47, 49 ; 147, 149 ; 247) et des disques (33, 35 ; 133, 135 ; 235) est supérieur ou égal à dix et inférieur ou égal à cent soixante.

5. Indicateur de position angulaire selon l'une quelconque des revendications 1 à 4, **caractérisé en ce que** le mécanisme à crans d'arrêt est disposé dans une molette de réglage (3 ; 103 ; 203) utilisée pour la commande manuelle.

6. Indicateur de position angulaire selon l'une quelconque des revendications 1 à 5, **caractérisé en ce qu'**au moins une partie de l'élément de positionnement est prévue à l'intérieur d'un boîtier (7 ; 107 ; 207).

7. Indicateur de position angulaire selon la revendication 6, **caractérisé en ce que**, dans l'espace intérieur (15) du boîtier, il est prévu un disque de code (57), qui fait partie de l'élément de positionnement (8), le disque de code (57) étant palpé par le capteur.

8. Indicateur de position angulaire selon l'une quelconque des revendications 1 à 7, **caractérisé en ce que** l'aimant permanent (45) est une partie de l'élément de positionnement.

9. Indicateur de position angulaire selon la revendication 6 ou 7, **caractérisé en ce que** l'aimant permanent (145 ; 245) est assemblé de manière fixe avec le boîtier (107 ; 207).
